(19) Europäisches Patentamt

European Patent Office

Office européen des brevets

(11) Numéro de publication: **0 355 919 B1**

(12) **FASCICULE DE BREVET EUROPEEN**

(45) Date de publication de fascicule du brevet: **09.02.94** (51) Int. Cl.⁵: **H04N 5/93**

(21) Numéro de dépôt: **89202100.7**

(22) Date de dépôt: **17.08.89**

(54) **Dispositif de sychronisation sur des paquets de données numériques et lecteur le comprenant.**

(30) Priorité: **19.08.88 FR 8811034**

(43) Date de publication de la demande:
**28.02.90 Bulletin 90/09**

(45) Mention de la délivrance du brevet:
**09.02.94 Bulletin 94/06**

(84) Etats contractants désignés:
**AT DE FR GB IT**

(56) Documents cités:
**EP-A- 0 120 344**
**DE-A- 3 331 714**
**FR-A- 2 574 242**
**US-A- 4 594 516**
**US-A- 4 626 913**

**SYMPOSIUM RECORD "JOINT SESSIONS" (BROADCAST AND CATV), 15TH INTERNATIONAL T.V. SYMPOSIUM, Montreux, 11-17 juin 1987, pages 181-204; C. SCHEPERS et al.: "An integrated multinorm receiver"**

**IEEE TRANSACTIONS ON CONSUMER ELECTRONICS, vol. CE-26, no. 3, août 1980, pages 657-663, IEEE, New York, US; M. HIRASHIMA et al.: "A circuit design of the sampling clock regeneration"**

(73) Titulaire: **N.V. Philips' Gloeilampenfabrieken**
**Groenewoudseweg 1**
**NL-5621 BA Eindhoven(NL)**

(72) Inventeur: **Schreurs, Jacobus**
**c/o INT. OCTROOIBUREAU B.V.**
**Prof. Holstlaan 6**
**NL-5656 AA Eindhoven(NL)**
Inventeur: **Horstman, Rudolf**
**c/o INT. OCTROOIBUREAU B.V.**
**Prof. Holstlaan 6**
**NL-5656 AA Eindhoven(NL)**

(74) Mandataire: **Groenendaal, Antonius Wilhelmus Maria et al**
**Internationaal Octrooibureau B.V.**
**Prof. Holstlaan 6**
**NL-5656 AA Eindhoven (NL)**

## Description

La présente invention a pour objet un dispositif de synchronisation d'un signal d'horloge locale sur une première fréquence d'horloge qui est celle d'un signal d'information comportant des paquets de données numériques récurrents espacés temporellement, qui est associé a un signal non interrompu selon une deuxième fréquence d'horloge dans un rapport déterminé avec la première fréquence d'horloge.

L'évolution de la technique des disques optiques numériques conduit à la réalisation de disques comportant des signaux audio et vidéo, les signaux audio étant ceux du désormais classique disque compact (marque déposée), et des signaux vidéo notamment de haute définition selon le standard MAC, en particulier D2-MAC. Selon le standard MAC, des paquets de données numériques correspondant au canal (ou aux canaux) sonores du signal vidéo sont suivis par des signaux analogiques de chrominance et de luminance multiplexés temporellement. A la lecture d'un tel support, il est nécessaire d'établir une synchronisation d'une horloge locale sur les paquets de données numériques du signal vidéo.

Un dispositif de synchronisation utilisant une boucle à verrouillage de phase est connu du document FR-A-2 574 242.

La mise en oeuvre d'une telle synchronisation ne va pas sans poser de problème. Le spectre de fréquence de l'horloge correspondante présente non seulement une fréquence centrale, en l'occurence 10,125 MHz, qui serait la même si l'information était présente en permanence, mais également des bandes latérales régulièrement espacées de part et d'autre de la bande centrale, d'un intervalle en l'occurence de 15.625 Hz, et dont la présence est due au fait que les informations sont présentes sous forme de paquets discontinus.

Or, l'asservissement de la rotation du disque présente une certaine précision qui se traduit par un glissement de fréquence d'au maximum 28 kHz. Il en résulte qu'une synchronisation asservie classique peut s'accrocher au hasard aussi bien sur la fréquence centrale désirée que sur certaines, en l'occurence au moins quatre, bandes latérales, d'où impossibilité dans ces derniers cas de recouvrer l'information.

L'invention a ainsi pour objet un dispositif de synchronisation permettant de résoudre un tel problème en procurant une synchronisation qui s'accroche a coup sûr sur une fréquence désirée, même dans le cas où des fréquences proches sont présentes dans le spectre de fréquences d'un signal d'information.

Le dispositif selon l'invention est ainsi caractérisé en ce qu'il comporte d'une part un comparateur de fréquences pour produire en sortie un signal d'erreur de fréquence correspondant au glissement de fréquence du signal d'horloge locale par rapport au signal non interrompu, et ayant de préférence une valeur qui est représentative du décalage temporel du signal d'horloge locale par rapport à un signal à la première fréquence d'horloge pendant une période d'une fréquence sous-multiple commune à la première et à la deuxième fréquence d'horloge, ladite fréquence sous-multiple déterminant de ce fait le décalage minimum de fréquence de l'horloge locale qui peut être discriminé, d'autre part un comparateur de phases pour produire en sortie, un signal d'erreur de phase qui, lorsque les données numériques d'un paquet sont présentes, représente la différence de phase entre le signal d'horloge locale et les données numériques du paquet, et qui correspond à une différence de phase nulle dans les intervalles entre les données numériques, et enfin des moyens de commande pour commander la fréquence du signal d'horloge locale en fonction desdits signaux d'erreur de fréquence et de phase.

Le comparateur de fréquence permet de connaître le décalage de fréquence avec une précision égale au décalage minimum qui peut être choisi en fonction des paramètres d'utilisation. Il assure ainsi le verrouillage de la synchronisation sur la bonne fréquence à condition que de décalage minimum de fréquence soit inférieur à l'écart qui existe entre la fréquence de synchronisation désirée et la fréquence la plus proche présente dans le spectre des fréquences du signal reçu. Lorsque ce verrouillage est effectué, la boucle de fréquence est inactive et la synchronisation est maintenue par la seule boucle de phase.

Selon une première variante, le comparateur de fréquence comporte un compteur dont une entrée de décomptage est connectée à la sortie de l'horloge locale, et dont une entrée de commande est agencée pour recevoir un premier signal à ladite fréquence sous-multiple, et qui est issu du signal non interrompu à la deuxième fréquence d'horloge.

Selon une deuxième variante, le comparateur de fréquences comporte un compteur dont une entrée de décomptage est agencée pour recevoir le signal non interrompu à la deuxième fréquence d'horloge, et dont une entrée de commande est agencée pour recevoir un deuxième signal à ladite fréquence sous-multiple, et qui est issu du signal d'horloge locale.

Le compteur est avantageusement agencé de manière à présenter, au début de chaque décomptage, un compte tel qu'un compte égal à zéro est obtenu à sa sortie pour un écart de fréquence maximal prédéterminé.

Le comparateur de fréquence peut comporter, pour réaliser une conversion analogique de la sortie du compteur, un échantillonneur-bloqueur dont l'entrée est connectée à la sortie du compteur et dont la sortie délivre le signal analogique d'erreur de fréquence, l'échantillonneur-bloqueur ne tenant avantageusement compte que d'un nombre donné de bits de poids le plus faible du signal de sortie du compteur.

Entre la sortie du comparateur de fréquence et l'entrée de l'additionneur peut être disposé un premier filtre passe bas pour filtrer la composante résiduelle à ladite fréquence sous-multiple, et pouvant servir également de filtre de boucle pour la boucle verrouillée en phase.

L'entrée du comparateur de phases peut être connectée à un détecteur duo-binaire dont l'entrée est agencée pour recevoir un signal codé correspondant aux paquets de données et produisant à sa sortie ledit signal d'informations.

Selon un mode de réalisation particulièrement avantageux, le comparateur de phases comporte une première et une deuxième bascule, l'entrée de cadencement de la deuxième bascule étant agencée pour recevoir ledit signal d'horloge locale et l'entrée de cadencement de la première bascule étant agencée pour recevoir ledit signal d'information, la deuxième bascule constituant un diviseur par deux dont une sortie inverseuse est connectée à l'entrée de données de la première bascule de telle sorte que, la première bascule produise à ses sorties des signaux dont le rapport cyclique est représentatif de la phase à mesurer. Pour produire le signal analogique d'erreur de phase, le comparateur de phase peut comporter une première et une deuxième porte OU exclusif, les entrées de la première porte étant connectées à la sortie non inverseuse de la première bascule et à la sortie non-inverseuse de la deuxième bascule, et les entrées de la deuxième porte étant connectées à la sortie inverseuse de la première bascule, et à la sortie non-inverseuse de la deuxième bascule, les sorties des première et deuxième portes étant connectées aux entrées respectivement inverseuse et noninverseuse d'un amplificateur dont la sortie constitue la sortie du comparateur de phases.

Entre la sortie du comparateur de phases et l'entrée correspondante de l'additionneur, peuvent être disposés un deuxième filtre passe-bas et/ou un intégrateur.

Entre la sortie de l'additionneur et l'entrée de commande de fréquence de l'horloge locale, peut être disposé un filtre à deux niveaux de gain, présentant aux très basses fréquences un gain plus élevé, de manière à permettre une compensation des dérives thermiques, notamment de l'horloge locale.

Selon un mode de réalisation préféré, le comparateur de phases est agencé pour recevoir un signal de fenêtre de données correspondant aux intervalles de temps où des paquets de données numériques sont présents dans le signal d'information de manière à n'être actif que pendant lesdits intervalles de temps.

L'invention concerne également un lecteur d'informations pour lire un disque sur lequel sont enregistrés selon une première fréquence d'horloge un signal d'information comportant des paquets de données numériques récurrents et espacés temporellement, et selon une deuxième fréquence d'horloge dans un rapport déterminé avec la première fréquence d'horloge, un signal de référence, ledit lecteur comportant des moyens pour lire et fournir séparément le signal d'information et le signal de référence, lesdits moyens comportant un dispositif de bouclage pour fournir un signal non interrompu à partir du signal de référence, un dispositif de décodage agencé pour recevoir à ses entrées le signal de référence et le signal non interrompu, et pour produire en sortie au moins un signal de commande d'entraînement en rotation du disque caractérisé en ce qu'il comporte un dispositif de synchronisation tel que défini ci-dessus et dont le comparateur de fréquence est agencé pour recevoir ledit signal non interrompu et dont le comparateur de phase est agencé pour recevoir ledit signal d'information.

Le signal d'information peut présenter des paquets d'information entre les paquets de données numériques, et le lecteur peut comporter un détecteur de synchronisation agencé pour recevoir d'une part le signal d'information et pour produire en sortie au moins un signal de fenêtre de paquets de données correspondant aux intervalles de temps où des paquets de données sont présents et des moyens d'inhibition agencés pour recevoir ledit signal de fenêtre et pour rendre le détecteur de phase insensible aux paquets d'information, lesdits moyens d'inhibition pouvant comporter selon un mode de réalisation préféré une entrée du détecteur de phase agencée pour recevoir ledit signal de fenêtre.

Les paquets d'information peuvent consister en de signaux vidéo et le détecteur de synchronisation peut être agencé pour produire séparément en sortie également un signal vidéo de ligne et un signal vidéo de trame. Le signal non interrompu peut être un signal audio-numérique selon le standard CD et le dispositif de décodage peut être agencé pour produire séparément en sortie également au moins un signal analogique audio.

L'invention sera mieux comprise à la lecture de la description qui va suivre donnée à titre d'exemple non limitatif, en liaison avec les dessins qui représentent :

- la figure 1 le spectre de fréquence correspondant à des paquets de données récurrents selon le système D2 MAC.
- les figures 2 et 3 deux variantes d'un dispositif de synchronisation selon l'invention
- la figure 4, la caractéristique de signal analogique d'erreur de fréquence
- la figure 5, un mode de réalisation du détecteur de phase selon l'invention
- la figure 6, un lecteur de disques optiques incorporant un dispositif selon l'invention.

Selon la figure 1, les paquets de données numériques de signal audio du standard D2 MAC ont un spectre de fréquences centré sur une fréquence centrale Fo égale à 10,125 MHz avec des bandes latérales espacées de n x $\Delta$o Hz (avec n entier positif ou négatif et $\Delta$o = 15.625 Hz) et qui sont dues au fait qu'il s'agit de paquets d'impulsions (de durée totale 11$\mu$s) qui sont présents au début de chaque ligne vidéo et qui sont séparés entre eux dans le temps par les signaux de chrominance et de luminance multiplixés temporellement de ladite ligne.

Lorsqu'un signal D2-MAC est enregistré sur un support tel qu'un disque optique, la lecture des informations des paquets impose une étape de synchronisation d'une horloge locale.

La présente invention se rapporte en particulier au cas où, sur le disque, est également enregistré un signal de référence, notamment numérique, et présentant une deuxième fréquence d'horloge donnée dans un rapport déterminé avec la première fréquence d'horloge. Ce signal de référence à partir duquel peut être généré un signal non interrompu peut être un signal numérique de même nature que celui du disque audio-numérique (CD). Un disque peut ainsi présenter un enregistrement sonore selon le standard du CD, et un enregistrement vidéo avec un ou plusieurs canaux sonores selon le standard D2-MAC.

Lors de la lecture d'un tel disque, la vitesse de rotation du disque est asservie, par exemple en mettant en oeuvre un asservissement classique utilisant une mesure d'erreur temporelle sur les impulsions de synchronisation de ligne. Un tel asservissement peut être également réalisé comme dans le cas du disque compact audio, en utilisant ce signal numérique ininterrompu.

Par contre, si on met en oeuvre une boucle de synchronisation classique pour effectuer la recherche de synchronisation, il est possible que ladite boucle se cale, non pas sur la fréquence centrale Fo, mais sur une des fréquences de la bande latérale.

En effet, selon les spécifications du standard PAL-Laservision, on peut considérer que l'erreur temporelle maximale du signal d'horloge du paquet tel qu'il est lu est de 17,5 $\mu$s à 25 Hz.

Les caractéristiques du disque entrent pour 6$\mu$s dans cette valeur, alors que l'erreur de positionnement du disque dûe à la précision de l'asservissement de vitesse correspond aux 11,5$\mu$s restants.

Pour un disque dont le rayon du sillonnage varie entre 55 et 145 mm et une vélocité de rotation de 50 $\pi$rad/s, il s'ensuit une incertitude sur la fréquence nominale Fo d'horloge de paquets qui est : $\Delta$Fo = ± 28 kHz.

Dans le cas indiqué ci-dessus, avec une fréquence centrale $F_o$ de 10,125 MHz et des bandes latérales espacées de n x 15,625 KHz, il s'ensuit qu'une recherche de synchronisation classique serait susceptible de s'accrocher aussi bien sur la fréquence centrale $F_o$ que sur au moins deux bandes latérales de part et d'autre de celle-ci, soit au moins cinq fréquences possibles pour une seule souhaitable.

L'idée de base de l'invention est de lever l'indétermination en utilisant le signal présent en permanence.

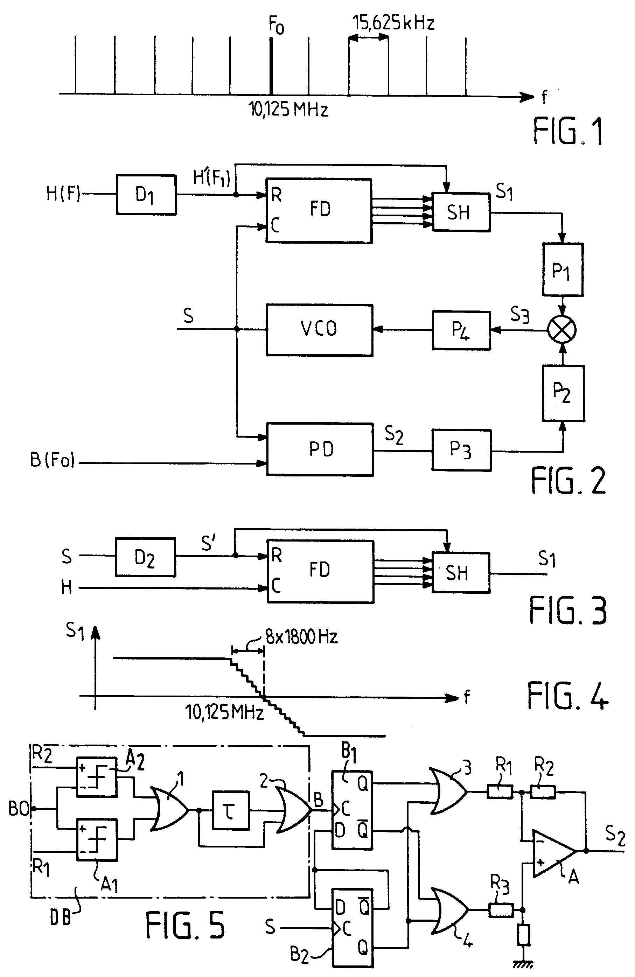

Selon la figure 2, un détecteur de fréquence FD présente deux entrées dont l'une est connectée à la sortie d'un diviseur $D_1$ dont l'entrée reçoit le signal non interrompu H qui est le signal d'horloge de fréquence nominale F correspondant au signal numérique présent en permanence et l'autre la sortie S d'un oscillateur local VCO à synchroniser. Le rapport de division du diviseur 1 est choisi de manière à produire un signal d'horloge H' dont la fréquence est un sous-multiple commun $F_1$ à sa fréquence nominale F, qui vaut 4, 3218 MHz pour un signal selon le standard CD, et à la fréquence $F_o$ de la bande centrale, en l'espèce 10,125 MHz. Le détecteur de fréquence FD est un compteur dont l'entrée remise à l'état initial R est connectée à la sortie du diviseur $D_1$, qui divise par 2401 dans le cas d'espèce ce qui donne une fréquence sous-multiple $F_1$ de 1800 Hz, et dont l'entrée de décomptage C est connectée à la sortie S de l'oscillateur VCO. A chaque impulsion de l'horloge H' de fréquence $F_1$, le compteur FD est remis à un état initial donné, immédiatement après échantillonnage par un échantillonneur-bloqueur SH dont l'entrée de signal est connectée à la sortie du compteur FD et dont l'entrée de synchronisation est connectée à la sortie du diviseur $D_1$. Cette manière de traiter un signal d'horloge à la fin d'un décompte est bien connue. Cette opération de décomptage consiste donc à compter le nombre d'impulsions délivrées par l'oscillateur VCO pendant une période du signal H'. On choisit le compte initial du décompteur pour qu'un compte 0 soit atteint au cas où l'oscillateur VCO a la fréquence maximale possible compte tenu de l'erreur maximale prise en compte.

La fréquence Fo vaut p$F_1$ (avec p entier positif), dans le cas d'espèce 5625. En outre, une simplification de l'échantillonneur-bloqueur est obtenue en tenant compte de la marge d'erreur que l'on a besoin de corriger, à savoir ± 28 kHz comme indiqué dans l'exemple ci-dessus. Ceci veut dire qu'après décomptage, le signal de sortie du compteur FD ne peut avoir qu'un certain nombre de valeurs comprises entre 2E, sont deux fois la partie entière $\Delta Fo/F_1$ et 0, soit dans l'exemple entre 15 et 0. C'est donc au compte initial p + 2E que sera initialisé le compteur FD avant chaque décomptage cadencé par le signal d'horloge H'. On peut alors se contenter d'un échantillonneur-bloqueur fonctionnant avec les bits de poids faible significatifs de la marge d'erreur à corriger, soit les quatre bits de poids faible dans l'exemple cité, ce qui permet d'utiliser un convertisseur numérique-analogique à quatre bits dont le niveau de sortie est décalé d'une demi-échelle de manière à obtenir un signal 0 pour f = $F_o$. Le décalage minimum de fréquence qui peut être discriminé est égal à $F_1$. Pour obtenir un verrouillage sur la fréquence centrale $F_o$, il faut que $F_1$ soit inférieure à $\Delta o$. On obtient alors la caractéristique en gradin donnée à la figure 4 pour le signal $S_1$ en fonction de la fréquence f du signal S. Le signal $S_1$ présente des paliers de niveau régulièrement espacés pour des valeurs de f comprises entre $Fo-EF_1$ et $Fo+EF_1$ et deux niveaux définis en dehors de cette fourchette. Dans l'exemple on a $EF_1$ = 8 x 1800Hz = 28,8kHz.

La sortie de l'échantillonneur-bloqueur SH est connectée à l'entrée d'un filtre $P_1$ de type passe-bas pour filtrer la composante de fréquence $F_1$, dans l'exemple 1800Hz et qui sert également de filtre de boucle. La boucle de phase comporte un détecteur de phase PD dont une entrée est connectée à la sortie S de l'oscillateur commandé en tension VCO et dont l'autre entrée reçoit un signal B qui correspond aux paquets de données numériques cadencées à la fréquence $F_o$. La sortie $S_2$ du détecteur de phase PD est connectée à l'entrée d'un filtre passe bas $P_3$ (par exemple de fréquence de coupure 20kHz) dont la sortie est connectée à l'entrée d'un intégrateur $P_2$ dont la sortie est elle-même connectée à une autre entrée de l'additionneur.

L'intégrateur $P_2$ peut avoir une réponse :

$$P_2 = - \frac{1 + p\tau_2}{p\tau_1}$$

avec $\tau_1$ = 58$\mu$s et $\tau_2$ = 336$\mu$s
et p = variable de Laplace.

Un additionneur a ses deux entrées connectées aux sorties des filtres $P_1$ et $P_2$. La sortie $S_3$ de l'additionneur est connectée à l'entrée de commande en tension de l'oscillateur VCO, éventuellement via un filtre $P_4$ à deux niveaux de gain, présentant aux très basses fréquences un gain plus élevé de manière à permettre une compensation des dérivés thermiques, notamment de l'horloge locale. Ce filtre peut avoir par exemple pour réponse :

$$P_4 = \frac{\tau_6}{\tau_5} \frac{1 + p\tau_5}{1 + p\tau_6}$$

avec

$\tau_5$ = 6,8 ms
$\tau_6$ = 129 ms.

On comprendra que le fonctionnement du dispositif de synchronisation ne peut être assuré que si la relation entre la première et la deuxième fréquence est déterminée et donc stable dans le temps. En effet, toute dérive d'une fréquence par rapport à l'autre serait de nature à perturber le fonctionnement en faussant les mesures.

Selon la figure 3, le signal H est introduit directement à l'entrée de comptage C du diviseur de fréquences D. Le signal S est divisé par un diviseur $D_2$ pour obtenir un signal S' de fréquence $F_1$. Dans l'exemple cité, le rapport de division est de 5625. Dans cette configuration, on mesure par décomptage la période du signal de fenêtre à 1800 Hz à l'aide de l'horloge H dont la fréquence est stable par définition.

La sortie du détecteur de phase varie donc d'un bit chaque fois que la fréquence de S varie de $F' = F_1 \times \frac{Fo}{F}$, soit dans le cas d'espèce 4218Hz. F' constitue le décalage minimum de fréquence de l'horloge locale qui peut être discriminé et sa valeur est déterminée par le choix de $F_1$. Pour obtenir un verrouillage sur la fréquence centrale $F_o$, il faut que $F'_1$ soit inférieur à $\Delta o$.

Le signal en sortie du détecteur de phase après décomptage est inversé logiquement par rapport au cas précédent étant donné que la mesure est effectuée avec un signe contraire que dans le cas précédent, et les bits de poids faible sont pris aux sorties logiques inverses du compteur. Ils sont introduits aux entrées de l'échantillonneur-bloqueur SH, qui est cadencé par le signal S'. On notera que le fait que cette fréquence varie légèrement n'a pas d'influence sensible sur les performances de la boucle.

Selon la figure 5, le signal B comportant la configuration de 1 et de 0 des paquets de données est obtenu à partir du signal BO lu sur un disque, à l'aide d'un décodeur duo-binaire DB connu et décrit par exemple dans l'article "D2-MAC-A new feature for digital TV" de H. Zibold et T. Fischer paru dans IEEE Transactions on Consumer Electronics Vol CE-32 n° 3 aout 1986 p.274-282. Il comporte deux discriminateurs de seuil $A_1$ et $A_2$ de seuils respectivement $R_1$ et $R_2$, une porte OU

exclusif 1 et un circuit de mise en forme comportant une porte OU exclusif 2 et un circuit retardateur de constante de temps $\tau$, pour produire le signal B avec une largeur $\tau$ suffisante, par exemple 50 ns, pour commander des bascules.

Le détecteur de phase est agencé pour produire un signal correspondant à une erreur de phase uniquement en présence des paquets de données.

Dans ce but, deux bascules $B_1$ et $B_2$ sont disposées en parallèle et de manière que, lorsque le signal B ne comporte pas de transition, une bascule cadencée par le signal S commande le fonctionnement et produise un signal de rapport cyclique 50%, ce qui correspond à une valeur de différence de phase nulle. Dans l'intervalle entre les paquets de données, les bascules $B_1$ et $B_2$ reçoivent les signaux de chrominance et de luminance, et pour éviter la production de signaux de phase erronés, la bascule $B_1$ est rendue active uniquement en présence de paquets de données à l'aide du signal de fenêtre de données. A titre de variante, il est également possible d'utiliser le signal de fenêtre de données pour que le signal B ne comporte de transition que lors des paquets de données, c'est-à-dire en éliminant de celui-ci les signaux de chrominance et de luminance . Dans ce cas, entre les paquets de données, le signal produit par le détecteur de phase présente un rapport cyclique de 50%, ce qui revient à rendre le détecteur de phase inactif.

Le signal B représentant les paquets de données est introduit à l'entrée de cadencement C d'une bascule $B_1$ de type D. Le signal S de sortie de l'oscillateur VCO est introduit à l'entrée de cadencement C d'une bascule $B_2$ de type D, dont l'entrée de donnée D et la sortie inverseuse $\overline{Q}$ sont interconnectées (montage en diviseur par deux) et connectées à l'entrée de données D de la bascule $D_1$. Une porte OU exclusif 3 a ses entrées connectées à la sortie non inverseuse Q de la bascule $B_1$ et à la sortie non inverseuse Q de la bascule $B_2$. Une porte OU exclusif 4 a ses entrées connectées pour l'une à la sortie inverseuse $\overline{Q}$ de la bascule $B_1$ et pour l'autre à la sortie non inverseuse de la bascule $B_2$. Les sorties des portes 3 et 4 sont reliées aux entrées respectivement inverseuse et non inverseuse d'un amplificateur A à travers des résistances respectivement $R_1$ et $R_3$. Une résistance $R_2$ de contre-réaction est disposée entre la sortie de l'amplificateur A et son entrée inverseuse. La sortie de l'amplificateur A délivre le signal analogique $S_2$ d'erreur de phase.

Un avantage de ce détecteur de phase est qu'il permet de maintenir dans l'asservissement une différence de phase de 180° entre le signal d'horloge S et le signal de données B, ce qui est souhaitable car l'horloge est utilisée pour échantillonner le signal de données B.

L'invention ne se limite pas aux modes de réalisation décrits ou représentés. Ainsi, dans certains cas, un support pourrait comporter directement un signal non interrompu à la fréquence $F_1$ $<\Delta o$ utilisable dans un dispositif selon l'invention sans division ultérieure. Dans ce cas, le sous multiple commun à $F_o$ et $F_1$ est la fréquence $F_1$. D'autre part, on comprendra que les filtres décrits seront mis en oeuvre en pratique seulement dans le cas où leur fonction aura une utilité suffisante. Enfin, la mise en oeuvre de l'invention peut être réalisée en utilisant notamment des comparateurs et des filtres numériques remplissant les mêmes fonctions. Enfin le signal non interrompu peut être analogique, auquel cas, il peut par exemple être mis sous forme numérique, de manière connue.

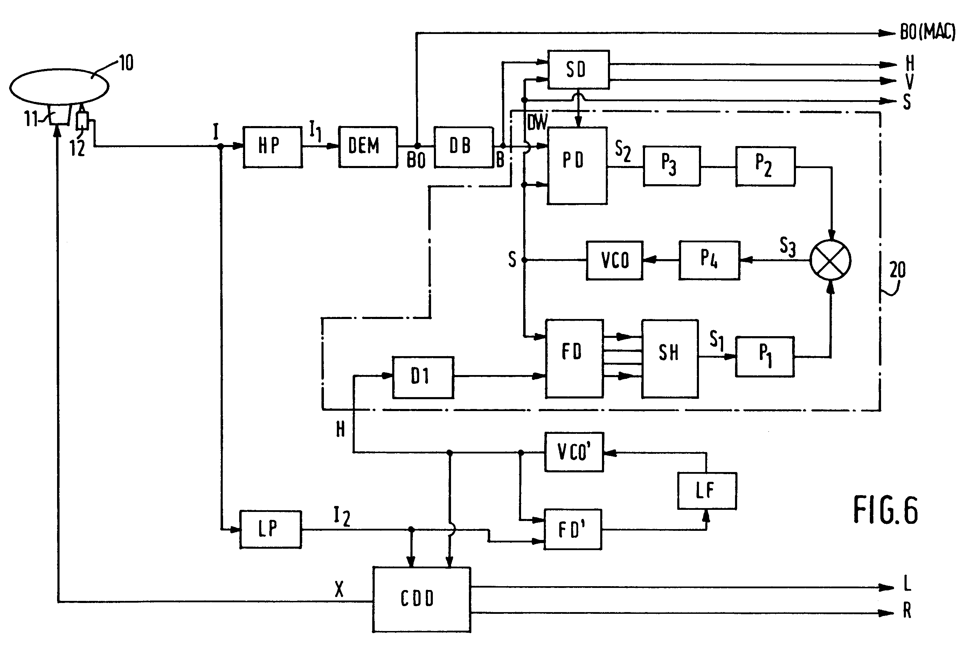

La figure 6 représente un lecteur de disques optiques 10 incorporant un dispositif tel que décrit ci-dessus.

Un tel disque optique 10 constitue un support d'un signal d'information comportant un signal vidéo selon le standard MAC, et un signal audio selon le standard CD. La fréquence du signal d'information est modulée selon le signal vidéo MAC et la largeur des impulsions du signal d'information est modulée selon le signal CD.

Le signal d'information du disque 10, qui est entraîné par un moteur asservi 11, est lu par un transducteur 12, par exemple, une tête de lecture optique d'un type connu qui délivre un signal I. Afin de séparer ses deux composantes MAC et CD, le signal I est amené à l'entrée d'un filtre passe haut HP qui délivre à sa sortie un signal $I_1$ correspondant au signal MAC modulée en fréquence et d'un filtre passe bas LP qui délivre à sa sortie un signal $I_2$ correspondant au signal CD.

Un circuit de décodage CDD du signal CD, de type connu, reçoit à ses entrées d'une part le signal $I_2$ et d'autre part un signal d'horloge H produit en sortie d'un oscillateur commandé en tension VCO'. Un détecteur de phase FD' reçoit à ses entrées les signaux H et $I_2$ et sa sortie, après éventuel filtrage par un filtre de boucle LF est introduit à l'entrée de commande en tension de l'oscillateur VCO'. Les circuits VCO', FD' et F forment une boucle classique à verrouillage de phase produisant le signal d'horloge H à la fréquence des données CD(4, 32 MHz). Le circuit de décodage CDD produit à ses sorties d'une part un signal X de commande du moteur 11 et d'autre part des signaux audio L et R correspondants à deux canaux sonores.

Le signal $I_1$ est introduit à l'entrée d'un démodulateur DEM dont la sortie produit un signal BO correspondant au signal MAC démodulé.

Les éléments de circuits entourés d'un trait mixte et désignés par le repère général 20 correspondant à ceux décrits dans les figures précédentes 2 et 5. Les mêmes éléments portent les mêmes signes de référence. Le signal H mentionné ci-dessus constitue le signal de référence non interrompu. Le diviseur $D_1$ reçoit à son entrée le signal H' et le décodeur duo-binaire DB reçoit à son entrée le signal BO. Le signal S de sortie de l'oscillateur VCO et le signal B de sortie du décodeur DB sont introduits aux entrées d'un détecteur de synchronisation SD qui génère des impulsions de trame V, des impulsions de ligne H et des impulsions de fenêtre de données DW. Ces impulsions de fenêtre de données sont introduites à une entrée du détecteur de phase PD pour inhiber son fonctionnement en dehors de la présence de paquets de données. Le détecteur de synchronisation SD fonctionne de la manière suivante. Dans le signal de sortie B, du décodeur duobinaire DB, il détecte des configurations de bit prédéterminées qui indiquent le début des trames vidéo. En réponse à une telle détection, une impulsion de trame V est produite. Pour générer les impulsions de ligne H et les signaux de fenêtres de données DW, le détecteur de synchronisation SD est pourvu de compteurs qui comptent les impulsions de l'horloge locale (signal S) et qui sont remis à zéro en réponse à la détection des débuts de trame (signal V). L'impulsion de fenêtre de données DW indique la présence des paquets de données dans le signal B. Ce signal de fenêtre de données DW est introduit à une entrée de commande de la bascule $B_1$ de manière à rendre la bascule $B_1$ active en présence des paquets de données et inactive dans les intervalles temporels entre ceux-ci.

**Revendications**

1. Dispositif de synchronisation d'un signal d'horloge locale sur une première fréquence d'horloge qui est celle d'un signal d'information comportant des paquets de données numériques récurrents et espacés temporellement, qui est associé à un signal non interrompu selon une deuxième fréquence d'horloge dans un rapport déterminé avec la première fréquence d'horloge, caractérisé en ce qu'il comporte :
    - un comparateur de fréquences (FD, SH) pour produire en sortie un signal d'erreur de fréquence correspondant au glissement de fréquence du signal (S) d'horloge locale par rapport au signal numérique non interrompu (H).
    - un comparateur de phases (PD) pour produire en sortie un signal d'erreur de phase qui, lorsque des données numériques (B) d'un paquet sont présentes, représente la différence de phase entre le signal (S) de l'horloge locale et les données numériques (B) dudit signal d'information, et qui correspond à une différence de phase nulle dans les intervalles entre les données numériques (B) du paquet
    - et des moyens de commande pour commander la fréquence du signal (S) d'horloge locale en fonction desdits signaux d'erreur de fréquence et de phase.

2. Dispositif selon la revendication 1 caractérisé en ce que le comparateur de fréquence est agencé pour que ledit signal d'erreur de fréquence ait une valeur représentative du décalage temporel du signal (S) d'horloge locale par rapport au signal interrompu (H) à la deuxième fréquence d'horloge pendant une période d'une fréquence $F_1$, multiple commune à la première (Fo) et à la deuxième (F) fréquence d'horloge, ladite fréquence sous-multiple ($F_1$) déterminant le décalage minimum de fréquence de l'horloge locale qui peut être discriminé.

3. Dispositif selon une des revendications 1 ou 2, caractérisé en ce que le comparateur de fréquences (FD, SH) comporte un compteur dont une entrée de décomptage (C) est connectée à la sortie (S) de l'horloge locale (VCO), et dont une entrée de commande (R) est agencée pour recevoir un premier signal à ladite fréquence sous-multiple, et qui est issu du signal non interrompu à la deuxième fréquence d'horloge.

4. Dispositif selon une des revendications 1 ou 2 caractérisé en ce que le comparateur de fréquences (FD) comporte un compteur dont une entrée de décomptage (C) est agencée pour recevoir le signal non interrompu (H) à la deuxième fréquence d'horloge et dont une entrée de commande (R) est agencée pour recevoir un deuxième signal (S') à ladite fréquence sous-multiple, et qui est issue du signal (S) d'horloge locale (VCO).

5. Dispositif selon une des revendications 2 à 4 caractérisé en ce que le compteur est agencé de manière à présenter, au début de chaque décomptage un compte tel qu'un compte égal à zéro est obtenu à sa sortie pour un écart de fréquence maximal prédéterminé.

6. Dispositif selon une des revendications 2 à 5 caractérisé en ce que le comparateur de fréquences comporte un échantillonneur-bloqueur (SH) dont l'entrée est connectée à la sortie du compteur (FD) et dont la sortie délivre ledit

signal ($S_1$) d'erreur de fréquence.

7. Dispositif selon une des revendications précédentes caractérisé en ce qu'il comporte, entre la sortie du comparateur de fréquence et l'entrée de l'additionneur, un filtre passe-bas ($P_1$).

8. Dispositif selon une des revendications précédentes caractérisé en ce que le comparateur de phases (PD) est connecté à la sortie d'un détecteur duobinaire dont l'entrée est agencée pour recevoir des signaux codés (BO) correspondant aux paquets de données et produisant à sa sortie ledit signal d'information.

9. Dispositif selon une des revendications précédentes, caractérisé en ce que le comparateur de phases (PD) comporte une première ($B_1$) et une deuxième ($B_2$) bascule, l'entrée de cadencement (C) de la deuxième bascule ($B_2$) étant agencée pour recevoir ledit signal (S) d'horloge locale et l'entrée de cadencement de la première bascule ($B_1$) étant agencée pour recevoir ledit signal d'information (B), la deuxième bascule constituant un diviseur par deux dont une sortie inverseuse est connectée à l'entrée de données (D) de la première bascule ($B_1$) de telle sorte que, la première bascule produise à ses sorties de signaux dont le rapport cyclique est représentétif de la phase à mesurer.

10. Dispositif selon la revendication 9, caractérisé en ce que le comparateur de phases (PD) comporte, pour produire ledit signal d'erreur de phase, une première (3) et une deuxième (4) porte OU exclusif, les entrées de la première porte (3) étant connectées à la sortie non inverseuse de la première bascule ($B_1$), et à la sortie non-inverseuse de la deuxième bascule ($B_2$), et les entrées de la deuxième porte (4) étant connectées à la sortie inverseuse de la première bascule ($B_1$) et à la sortie non-inverseuse de la deuxième bascule ($B_2$) les sorties des première et deuxième portes étant connectées aux entrées respectivement inverseuse et non-inverseuse d'un amplificateur dont la sortie constitue la sortie ($S_2$) du comparateur de phases.

11. Dispositif selon une des revendications précédentes caractérisé en ce qu'il comporte, entre la sortie du comparateur de phases et l'entrée correspondante de l'additionneur, un filtre passe-bas ($P_3$).

12. Dispositif selon une des revendications précédentes caractérisé en ce qu'il comporte un

intégrateur ($P_2$) disposé entre la sortie du comparateur de phases et l'entrée correspondante de l'additionneur.

13. Dispositif selon une des revendications précédentes caractérisé en ce qu'il comporte entre la sortie des moyens de commande et l'entrée de commande de fréquence de l'horloge locale (VCO), un filtre à deux niveaux de gain ($P_4$), présentant aux très basses fréquences un gain plus élevé, de manière à permettre une compensation des dérives thermiques.

14. Dispositif selon une des revendications précédentes caractérisé en ce que le comparateur de phase (PD) est agencé pour recevoir un signal de fenêtre de données (DW) correspondant aux intervalles de temps où des paquets de données numériques sont présents dans le signal d'information de manière à n'être actif que pendant lesdits intervalles de temps.

15. Lecteur d'informations pour lire un disque sur lequel sont enregistrés selon une première fréquence d'horloge un signal d'information comportant des paquets de données numériques récurrents et espacés temporellement, et selon une deuxième fréquence d'horloge dans un rapport déterminé avec la première fréquence d'horloge, un signal de référence, ledit lecteur comportant des moyens pour lire et fournir séparément le signal d'information et le signal de référence, lesdits moyens comportant un dispositif de bouclage pour fournir un signal non interrompu à partir du signal de référence, un dispositif de décodage agencé pour recevoir à ses entrées le signal de référence et le signal non interrompu, et pour produire en sortie au moins un signal de commande d'entraînement en rotation du disque caractérisé en ce qu'il comporte un dispositif de synchronisation selon une des revendications 1 à 13 dont le comparateur de fréquence est agencé pour recevoir ledit signal non interrompu (H) et dont le comparateur de phase est agencé pour recevoir ledit signal d'informations (B).

16. Lecteur selon la revendication 15 caractérisé en ce que le signal d'information présente des paquets d'information entre les paquets de données numériques, en ce qu'il comporte un détecteur de synchronisation (SD) agencé pour recevoir d'une part le signal d'informations (B) et pour produire en sortie au moins un signal de fenêtre de paquets de données (DW) correspondant aux intervalles de temps où des paquets de données sont présents et des moyens d'inhibition agencés pour recevoir ledit signal de fenêtre (DW) et pour rendre le détecteur de phase (PD) insensible aux paquets d'information.

17. Lecteur selon la revendication 16 caractérisé en ce que lesdits moyens d'inhibition comportent une entrée du détecteur de phase (PO) agencée pour recevoir ledit signal de fenêtre (DW).

18. Lecteur selon une des revendication 16 ou 17 caractérisé en ce que les paquets d'information consistent en des signaux vidéo et en ce que le détecteur de synchronisation est agencé pour produire séparément en sortie également un signal vidéo de ligne (H) et un signal vidéo de trame (V).

19. Lecteur selon une des revendications 15 à 18 caractérisé en ce que le signal non interrompu est un signal audio-numérique selon le standard CD et en ce que le dispositif de décodage (CDD) est agencé pour produire séparément en sortie également au moins un signal analogique audio (L, R).

## Claims

1. Device for the synchronization of a local clock signal with a first clock frequency which is that of an information signal comprising digital repetitive time-spaced data bursts, which has a relationship with a continuous signal with a second clock frequency which has a given ratio to the first clock frequency, characterized in that it comprises,
   - a frequency comparator (FD, SH) for producing at its output a frequency-error signal corresponding to the frequency shift of the local clock signal (S) relative to the continuous signal (H),
   - a phase comparator (PD) for producing at its output a phase error signal which, when the digital data of a burst are presented, represents the phase difference between the local clock signal (S) and the digital data (B) of the burst, and which corresponds to a zero-phase difference in the intervals between the digital data (B) of the burst,
   - and control means for controlling the frequency of the local clock signal (S) as a function of said frequency and phase error signals.

2. Device as claimed in Claim 1, characterized in that the frequency comparator is adapted to supply a frequency-error signal whose value is representative of the shift in time of the local clock signal (S) relative to the continuous signal (H) of the second clock frequency during one period of a frequency $F_1$ which is a submultiple common to the first clock frequency ($F_o$) and to the second clock frequency (F), said sub-multiple frequency ($F_1$) defining the minimum shift of the local clock frequency that can be discriminated.

3. Device as claimed in Claim 1 or 2, characterized in that the frequency comparator (FD, SH) comprises a counter having a count-down input (C) connected to the output (S) of the local clock (VCO), and of which a control input (R) is arranged to receive a first signal having said sub-multiple frequency, which first signal is derived from the continuous signal having the second clock frequency.

4. Device as claimed in Claim 1 or 2, characterized in that the frequency comparator (FD) comprises a counter having a count-down input (C) arranged to receive the continuous signal (H) having the second clock frequency, and having a control input (R) arranged to receive a second signal (S') having said sub-multiple frequency, which second signal is derived from the signal (S) from the local clock (VCO).

5. Device as claimed in any one of the Claims 2 to 4, characterized in that the counter is adapted in such a way that at the beginning of each count-down cycle a count, for example a zero count, is obtained at its output in the case of a predetermined maximum frequency shift.

6. Device as claimed in any one of the Claims 2 to 5, characterized in that the frequency comparator comprises a sample-and-hold circuit (SH) whose input is connected to the output of the counter (FD) and whose output supplies said frequency error signal ($S_1$).

7. Device as claimed in any one of the preceding claims, characterized in that it comprises a low-pass filter ($P_1$) between the output of the frequency comparator and the input of the adder.

8. Device as claimed in any one of the preceding Claims, characterized in that the phase comparator (PD) is connected to the output of a duobinary detector whose input is arranged to receive encoded signals (BO) corresponding to the data bursts, said detector producing said information signal at its output.

9. Device as claimed in any one of the preceding Claims, characterized in that the phase comparator (PD) comprises a first flip-flop (B$_1$) and a second flip-flop (B$_2$), the clock input (C) of the second flip-flop (B$_2$) being arranged to receive said local clock signal (S) and the clock input of the first flip-flop (B$_1$) being arranged to receive said information signal (B), which second flip-flop constitutes a divide-by-two circuit having an inverting output connected to the data input (D) of the first flip-flop (B$_1$) so that the first flip-flop generates on it outputs signals whose duty cycle is representative of the phase difference to be measured.

10. Device as claimed in Claim 9, characterized in that, for generating said phase-error signal, the phase comparator (PD) comprises a first (3) and a second (4) exclusive-OR gate, the inputs of the first gate (3) being connected to the non-inverting output of the first flip-flop (B$_1$) and to the non-inverting output of the second flip-flop (B$_2$), and the inputs of the second gate (4) being connected to the inverting output of the first flip-flop (B$_1$) and to the non-inverting output of the second flip-flop (B$_2$), the outputs of the first and the second gates being connected respectively, to the inverting input and the non-inverting input of an amplifier whose output constitutes the output (S$_2$) of the phase comparator.

11. Device as claimed in any one of the preceding Claims, characterized in that it comprises a low-pass filter (P$_3$) between the output of the phase comparator and the corresponding input of the adder.

12. Device as claimed in any one of the preceding Claims, characterized in that it comprises an integrator (P$_2$) between the output of the phase comparator and the corresponding input of the adder.

13. Device as claimed in any one of the preceding Claims, characterized in that a filter having two gain levels (P$_4$) is arranged between the output of the control means and the frequency control input of the local clock (VCO), which filter has a higher gain for very low frequencies, to provide compensation for thermal drift.

14. Device as claimed in any one of the preceding Claims, characterized in that the phase comparator (PD) is arranged to receive a data-window signal (DW) corresponding to the time intervals in which the digital data bursts appear in the information signal, so that it is operative only during said time intervals.

15. Information read apparatus for reading a disc on which an information signal comprising recurrent and time-spaced digital data bursts with a first clock frequency are recorded, and on which a reference signal is recorded with a second clock frequency which has a given relationship with said first clock frequency, said read apparatus comprising reading means for reading and supplying the information signal and the reference signal separately, said reading means comprising a locking device for producing a continuous signal on the basis of the reference signal, a decoding device arranged to receive on its inputs the reference signal and the continuous signal, and to produce on its output at least a disc drive control signal, characterized in that the apparatus comprises a synchronization device as defined in one of the Claims 1 to 13, whose frequency comparator is arranged to receive said continuous signal (H) and whose phase comparator is arranged to receive said information signal (B).

16. Read apparatus as claimed in Claim 15, characterized in that the information signal comprises information bursts between the digital data burst, in that the apparatus comprises a synchronization detector (SD) constructed to receive the information signal (B) and to produce at its output at least one data window signal (DW) that corresponds to the time intervals in which the data bursts are present, and inhibiting means constructed to receive said window signal (DW) and to render the phase detector (BD) insensitive to the information bursts.

17. Read apparatus as claimed in Claim 16, characterized in that said inhibiting means comprise an input of the phase detector (PO) arranged to receive said window signal (DW).

18. Read apparatus as claimed in Claim 16 or 17, characterized in that the information bursts comprise video signals and in that the synchronization detector is adapted to produce a separate video line signal (H) and video frame signal (V) at its output.

19. Read apparatus as claimed in any one of the Claims 15 to 18, characterized in that the continuous signal is a digital audio signal in conformity with the CD standard and in that the decoding device (CDD) is constructed to produce at least a separate analog audio signal (L,R) at its output.

**Patentansprüche**

1. Gerät zum Synchronisieren eines örtlichen Taktsignals auf einer ersten Taktfrequenz, die die Taktfrequenz eines Informationssignals mit digitalen wiederkehrenden und zeitlich im Abstand voneinander liegenden digitalen Datenpaketen ist, das einem ununterbrochenen Signal nach einer zweiten Taktfrequenz in einem mit der ersten Taktfrequenz bestimmten vorgegebenen Verhältnis zugeordnet ist, dadurch gekennzeichnet, daß das Gerät folgende Elemente enthält:

- einen Frequenzkomparator (FD, SH) zum Erzeugen eines Frequenzfehlersignals an seinem Ausgang entsprechend der Frequenzverschiebung des örtlichen Taktsignals (S) in bezug auf das ununterbrochene Signal (H),
- einen Phasenkomparator (PD) zum Erzeugen eines Phasenfehlersignals an seinem Ausgang, das den Phasenunterschied zwischen dem örttlichen Taktsignal (S) und den Digitaldaten (B) des Informationssignals darstellt, wenn digitale Daten (B) eines Pakets zugeführt werden, und
- ein Steuermittel zum Steuern der Frequenz des örtlichen Taktsignals (S) abhängig von den Frequenzfehler- und Phasenfehlersignalen.

2. Gerät nach Anspruch 1, dadurch gekennzeichnet, daß der Frequenzkomparator zum Abgeben eines Frequenzfehlersignals ausgelegt ist, dessen Wert die zeitliche Verschiebung des örtlichen Taktsignals (S) in bezug auf das ununterbrochene Signal (H) auf der zweiten Taktfrequenz in nur einer Periode einer Frequenz $F_1$ darstellt, die der ersten Taktfrequenz (Fo) und der zweiten Taktfrequenz (F) mehrfach gemeinsam ist, und die Unterresonanzfrequenz ($F_1$) die Mindestverschiebung der örtlichen Taktfrequenz definiert, die diskriminierbar ist.

3. Gerät nach Anspruch 1 oder 2, dadurch gekennzeichnet, daß der Frequenzkomparator (FD, SH) einen Zähler enthält,von dem ein Abwärtszähleingang (C) in Verbindung mit dem Ausgang (S) des örtlichen Taktgebers (VCO) und von dem ein Steuereingang (R) zum Empfangen eines ersten Signals auf der Unterresonanzfrequenz angeordnet sind, wobei das erste Signal vom ununterbrochenen Signal der zweiten Taktfrequenz abgeleitet ist.

4. Gerät nach Anspruch 1 oder 2, dadurch gekennzeichnet, daß der Frequenzkomparator (FD) einen Zähler enthält, von dem ein Abwärtszähleingang (C) zum Empfangen des ununterbrochenen Signals (H) auf der zweiten Taktfrequenz und von dem ein Steuereingang (R) zum Empfangen eines zweiten Signals (S') auf der Unterresonanzfrequenz angeordnet sind, wobei das zweite Signal vom Signal (S) aus dem örtlichen Taktgeber (VCO) abgeleitet ist.

5. Gerät nach einem der Ansprüche 2 bis 4, dadurch gekennzeichnet, daß der Zähler derart aufgebaut ist, daß beim Beginn jedes Abwärtszählzyklus ein Zahlstand, beispielsweise der Zählstand Null, bei einer vorgegebenen maximalen Frequenzverschiebung an seinem Ausgang erhalten wird.

6. Gerät nach einem der Ansprüche 2 bis 5, dadurch gekennzeichnet, daß der Frequenzkomparator eine Abtast-und-Halteschaltung (SH) enthält, deren Eingang mit dem Ausgang des Zählers (FD) verbunden ist und deren Ausgang das Frequenzfehlersignal ($S_1$) liefert.

7. Gerät nach einem oder mehreren der vorangehenden Ansprüche, dadurch gekennzeichnet, daß es ein Tiefpaßfilter ($P_1$) zum Ausfiltern des Frequenzfehlersignals enthält, und dieses Filter zwischen dem Ausgang des Frequenzkomparators und dem Eingang des Steuermittels angeordnet ist.

8. Gerät nach einem oder mehreren der vorangehenden Ansprüche, dadurch gekennzeichnet, daß der Phasenkomparator (PD) mit dem Ausgang eines Duobinärdetektors verbunden ist, dessen Eingang zum Empfangen codierter Signale (BO) entsprechend den Datenpaketen angeordnet ist, wobei der Detektor das Informationssignal an seinem Ausgang erzeugt.

9. Gerät nach einem oder mehreren der vorangehenden Ansprüche, dadurch gekennzeichnet, daß der Phasenkomparator (PD) ein erstes Flipflop ($B_1$) und ein zweites Flipflop ($B_2$) enthält, wobei der Takteingang (C) des zweiten Flipflops ($B_2$) zum Empfangen des örtlichen Taktsignals (S) und der Takteingang des ersten Flipflops ($B_1$) zum Empfangen des Informationssignals (B) angeordnet sind, und das zweite Flipflop eine Halbierschaltung mit einem invertierenden Ausgang bildet, der derart mit dem Dateneingang (D) des ersten Flipflops ($B_1$) verbunden ist, daß das erste Flipflop Ausgangssignale erzeugt, deren Tastverhältnis die zu messende Phase darstellt.

10. Gerät nach Anspruch 9, dadurch gekennzeichnet, daß zum Erzeugen des Phasenfehlersignals der Phasenkomparator (PD) ein erstes (3) und ein zweites (4) Exklusiv-ODER-Gatter enthält, wobei die Eingänge des ersten Gatters (3) mit dem nichtinvertierenden Ausgang des ersten Flipflops (B$_1$) und mit dem nichtinvertierenden Ausgang des zweiten Flipflops (B$_2$) verbunden sind, und die Eingänge des zweiten Gatters (40) mit einem invertierenden Ausgang des ersten Flipflops (B$_1$) und mit dem nichtinvertierenden Ausgang des zweiten Flipflops (B$_2$) verbunden sind, wobei die Ausgänge des ersten und des zweiten Gatters mit dem invertierenden Eingang bzw. mit dem nichtinvertierenden Eingang eines Verstärkers verbunden sind, dessen Ausgang den Ausgang (S$_2$) des Phasenkomparators darstellt.

11. Gerät nach einem oder mehreren der vorangehenden Ansprüche, dadurch gekennzeichnet, daß es ein Tiefpaßfilter (P$_3$) zwischen dem Ausgang des Phasenkomparators und dem entsprechenden Eingang des Addierers angeordnet ist.

12. Gerät nach einem oder mehreren der vorangehenden Ansprüche, dadurch gekennzeichnet, daß es einen Integrator (P$_2$) zwischen dem Ausgang des Phasenkomparators und dem Eingang des Addierers angeordnet ist.

13. Gerät nach einem oder mehreren der vorangehenden Ansprüche, dadurch gekennzeichnet, daß ein Filter mit zwei Verstärkungspegeln (P$_4$) zwischen dem Ausgang des Steuermittels und dem Frequenzsteuereingang des örtlichen Taktgebers (VCO) angeordnet ist, und das Filter für sehr niedrige Frequenzen eine höhere Verstärkung hat, um thermische Drift ausgleichen zu können.

14. Gerät nach einem oder mehreren der vorangehenden Ansprüche, dadurch gekennzeichnet, daß der Phasenkomparator (PD) zum Empfangen eines Datenfenstersignals (DW) entsprechend den Zeitintervallen angeordnet ist, in denen die digitalen Datenpakete auf derartige Weise im Informationssignal erscheinen, daß es nur in den Zeitintervallen wirksam ist.

15. Informationslesegerät zum Lesen einer Platte, auf der ein Informationssignal mit wiederkehrenden und zeitlich im Abstand voneinander liegenden digitalen Datenpaketen mit einer ersten Taktfrequenz und ein Bezugssignal mit einer zweiten Taktfrequenz aufgezeichnet sind, die in einem vorgegebenen Verhältnis zur ersten Taktfrequenz steht, wobei das Gerät ein Mittel zum Lesen und getrennten Abgeben des Informationssignals und des Bezugssignals enthält, dieses Mittel eine Schleifeneinrichtung zum Ableiten eines ununterbrochenen Signals, ausgehend vom Bezugssignal, einen Decoder zum Empfangen des Bezugssignals und des ununterbrochenen Signals, und zum Erzeugen wenigstens eines Steuersignals zum Starten der Plattendrehung enthält, dadurch gekennzeichnet, daß das Gerät ein Synchronisationsgerät nach einem oder mehreren der Ansprüche 1 bis 13 enthält, dessen Frequenzkomparator, der zum Empfangen des ununterbrochenen Signals (H) und dessen Phasenkomparator zum Empfangen des Informationssignals (B) aufgebaut sind.

16. Lesegerät nach Anspruch 15, dadurch gekennzeichnet, daß das Informationssignal Informationspakete zwischen den digitalen Datenpaketen enthält, daß das Gerät einen Synchronisationsdetektor (SD) zum Empfangen eines Teils des Informationssignals (DW) und zum Erzeugen wenigstens eines Datenpaketfenstersignals (DW) an seinem Ausgang entsprechend den Zeitintervallen, in denen die Datenpakete vorhanden sind, und ein Blockiermittel zum Empfangen des Fenstersignals (DW) enthält und dazu ausgelegt ist, den Phasendetektor (BD) für die Informationspakete unempfindlich zu machen.

17. Lesegerät nach Anspruch 16, dadurch gekennzeichnet, daß das Blockiermittel einen Eingang des Phasendetektors (PO) zum Empfangen des Fenstersignals (DW) enthält.

18. Lesegerät nach Anspruch 16 oder 17, dadurch gekennzeichnet, daß die Informationspakete Videosignale enthalten, und daß der Synchronisationsdetektor zum getrennten Erzeugen sowohl eines Videozeilensignals (H) als auch eines Videohalbbildsignals (V) an seinem Ausgang ausgelegt ist.

19. Lesegerät nach einem oder mehreren der Ansprüche 15 bis 18, dadurch gekennzeichnet, daß das ununterbrochene Signal ein digitales Audiosignal in Übereinstimmung mit der CD-Norm ist, und daß der Decoder (CDD) zum Erzeugen wenigstens eines getrennten analogen Audiosignals (L, R) an seinem Ausgang aufgebaut ist.

FIG.1

FIG.2

FIG.3

FIG.4

FIG.5

FIG.6

EP 0 355 919 B1